# EUROPÄISCHE PATENTANMELDUNG

(11) **EP 2 012 164 A1**
(43) Veröffentlichungstag der Anmeldung: **07.01.2009**
(21) Anmeldenummer: 07013302.0
(22) Anmeldetag: 06.07.2007
(51) Int. Cl.: G02B 23/24, F16C 7/02, G01B 11/02

(54) **Prüfkopf, Prüfvorrichtung und Prüfanordnung zum Prüfen der Oberfläche einer Bohrung**

(71) Anmelder: VITRONIC Dr.-Ing. Stein Bildverarbeitungssysteme GmbH, 65189 Wiesbaden (DE)
(72) Erfinder: Trautwein, Stefan, 65207 Wiesbaden (DE); Schweikert, Patrik, 64367 Mühltal (DE); Schweiger, Michael, 55271 Stadecken-Elsheim (DE)
(74) Vertreter: Müller, Thomas Michael

(57) **Zusammenfassung**

Prüfkopf für eine Prüfvorrichtung zum Prüfen einer Oberfläche 26 einer Bohrung eines Objekts 1, wobei der Prüfkopf 7 um eine Längsachse L drehbar angeordnet ist, und wobei ein Umlenkspiegel 15 an dem Prüfkopf 7 befestigt ist, der von der Oberfläche 26 der Bohrung reflektiertes Licht, das entlang eines quer zur Längsachse L verlaufenden ersten Strahlengangabschnitts auf den Umlenkspiegel 15 trifft, in Richtung eines axial zur Längsachse L verlaufenden zweiten Strahlengangabschnitts umlenkt, wobei der Umlenkspiegel ein konvex geformter Freiformspiegel 15 ist.

## Beschreibung

Die Erfindung betrifft einen Prüfkopf für eine Prüfvorrichtung zum Prüfen einer Oberfläche einer Bohrung eines Objekts, insbesondere der Laufflächen einer Pleuelstange eines Verbrennungsmotors, wobei der Prüfkopf um eine Längsachse drehbar angeordnet ist und wobei ein Umlenkspiegel an dem Prüfkopf befestigt ist, der von der Oberfläche der Bohrung reflektiertes Licht, das entlang eines quer, vorzugsweise radial, zur Längsachse verlaufenden ersten Strahlengangabschnitts auf den Umlenkspiegel trifft, in Richtung eines axial zur Längsachse verlaufenden zweiten Strahlengangabschnitts umlenkt.

Unter Strahlengang bzw. Strahlengangabschnitt wird die Vorzugsrichtung der Lichtausbreitung verstanden, wobei die Strahlengangabschnitte jeweils entlang einer optischen Achse verlaufen. Innerhalb des Strahlengangs oder der Strahlengangabschnitte können die Lichtstrahlen auch Lichtstrahlenverläufe aufweisen, die von einer parallelen zur jeweiligen optischen Achse abweichen. Die wesentliche Richtung verläuft jedoch entlang dem Strahlengang bzw. Strahlengangabschnitt.

Ein solcher Prüfkopf kann z.B. zum Prüfen von Laufflächen in den Bohrungen einer Pleuelstange verwendet werden. Bekannte Prüfvorrichfiungen weisen hierzu ein Endoskop auf, dessen Prüfkopf in die Bohrung koaxial zu dieser eingeführt wird. Hierbei weist der Prüfkopf im quer verlaufenden Strahlengangabschnitt zwischen dem Umlenkspiegel und der Oberfläche der Bohrung eine Linse auf, um den gewünschten Bereich der Bohrung in der gesamten axialen Erstreckung abbilden zu können. Aufgrund der rotationssymmetrischen Gestaltung der Linse und dem planen Umlenkspiegel kann die Oberflächen der Bohrung nur mit einem festen Verhältnis zwischen dem Abbildungsmaßstab in axialer Richtung der Bohrung und dem Abbildungsmaßstab in Umfangsrichtung der Bohrung abgebildet werden.

Aufgabe der vorliegenden Erfindung ist es, einen Prüfkopf, eine Prüfvorrichtung und eine Prüfanordnung bereit zu stellen, bei der die Oberfläche der Bohrung mit beliebigen Abbildungsmaßstäben abgebildet werden kann.

Die Aufgabe wird erfindungsgemäß durch einen eingangs genannten Prüfkopf gelöst, bei dem der Umlenkspiegel ein Freiformspiegel ist.

Die reflektierende Oberfläche des Freiformspiegels ist in Form einer Freiformfläche gestaltet, die je nach Anwendungsfall beliebig geformt sein kann und somit eine beliebige Abbildung der zu überprüfenden Oberfläche bzw. des Oberflächenabschnitts ermöglicht. Der Freiformspiegel ist vorzugsweise konvex geformt.

Der Freiformspiegel kann derart gestaltet sein, dass der Abbildungsmaßstab in Umfangsrichtung der zu überprüfenden Bohrung von dem Abbildungsmaßstab in Längsrichtung der zu überprüfenden Bohrung abweicht. Es sind beliebige Abbildungsmaßstäbe in Umfangsrichtung und in Längsrichtung möglich, so dass die Abbildung flexibel an die Erfordernisse des Einzelfalls angepasst werden kann.

Der Bildwinkel in Längsrichtung zum Abbilden der gesamten Oberfläche der Bohrung in axialer Richtung ist geometrisch von der Bohrung vorgegeben. Bei einer Linse wäre somit auch die Bildwinkel in Umfangsrichtung vorgegeben. Durch den Einsatz eines Freiformspiegels kann jedoch für diesen Anwendungsfall, bei dem man die gesamte axiale Länge der Bohrung abbilden möchte, den abgebildeten Bereich der Oberfläche der Bohrung in Umfangsrichtung anpassen. Somit kann z.B. erzielt werden, dass man in Umfangsrichtung eine höhere Auflösung erzielt, in dem man den Bildwinkel so wählt, dass ein kleiner Umfangsbereich der Bohrung auf die gesamte Breite des Bildsensors abgebildet wird. Umgekehrt kann man einen größeren Bereich in Umfangsrichtung auf den Bildsensor abbilden, um mit einer Aufnahme eine größeren Umfangsbereich abzubilden. Dies geht zwar zu Lasten der Auflösung, da der Bildsensor eine feste Auflösung in beiden Bildachsen vorgibt, jedoch kann hierdurch die gesamte Oberfläche der Bohrung mit einer geringeren Anzahl von Abbildungen erfasst werden.

Vorzugsweise ist der Prüfkopf im Bereich des quer zur Längsachse verlaufenden ersten Strahlengangabschnitts frei von optischen Bauelementen. Somit wird ein sehr einfacher Aufbau gewährleistet. Eine weitere Linse im quer verlaufenden ersten Strahlengangabschnitt ist nicht erforderlich.

Vorzugsweise weist der Prüfkopf einen ersten Strahlenkanal entlang des ersten Strahlengangabschnitts auf. Ferner weist der Prüfkopf vorzugsweise einen zweiten Strahlenkanal entlang zumindest einem Teil des zweiten Strahlengangabschnitts auf.

Der Prüfkopf kann Mittel zum Zentrieren des Prüfkopfs in der zu überprüfenden Bohrung aufweisen.

Die Mittel zum Zentrieren des Prüfkopfs können in Form einer zylindrischen Außenfläche des Prüfkopfs gestaltet sein, deren Durchmesser derart an den Durchmesser der Bohrung angepasst ist, dass der Prüfkopf mit Spielpassung in die Bohrung eingeführt werden kann. Die Außenfläche kann jedoch auch konisch gestalten sein, so dass sich die Außenfläche in einer Bohrung oder einer konischen Ausnehmung selbst zentriert.

Somit wird keine weitere separate Einrichtung benötigt, die das Objekt bzw. den Prüfling gegenüber dem Prüfkopf positioniert. Der Prüfkopf selbst dient zur Zentrierung der Bohrung relativ zur Längsachse.

Hierbei kann der Prüfkopf in Form eines Zylinderkörpers gestaltet sein, in dem die Strahlenkanäle ausgebildet sind.

Wenn der Prüfkopf in Form eines Zylinderkörpers gestaltet ist, mündet der erste Strahlenkanal in die zylindrische Außenfläche. Der erste Strahlenkanal kann als im Querschnitt betrachtet im wesentlichen kreissektorförmige Ausnehmung im Prüfkopf gestaltet sein.

Hierbei kann die Ausnehmung reflektierende Seitenflächen aufweisen.

Insbesondere, wenn die Ausnehmung axial in eine Stirnfläche des Prüfkopfs mündet, wobei die Stirnfläche von der Abbildungsebene am Ende des axialen zweiten Strahlengangabschnitts abgewandt ist, kann eine Lichtquelle gegenüber der Stirnfläche angeordnet sein. In diesem Fall fällt Licht in den ersten Strahlenkanal, wobei das Licht der Lichtquelle an den reflektierenden Seitenflächen in Richtung zur überprüfenden Oberfläche reflektiert wird. Somit wird ein einfacher Aufbau für die Beleuchtungsmittel ermöglicht. Grundsätzlich ist es auch möglich, Licht in den Strahlengang einzukoppeln, so dass das Licht zur Beleuchtung vom axial verlaufenden zweiten Strahlengangabschnitt über den ersten Strahlengangabschnitt auf die zu überprüfende Oberfläche geworfen wird. Diese Anordnung ermöglicht zusätzlich oder alternativ zu der oben beschriebenen externen Beleuchtung ein punktuelles, zielgerichtetes Beleuchten der Oberfläche.

Die Aufgabe wird ferner durch eine Prüfvorrichtung zum Prüfen der Oberfläche einer Bohrung eines Objekts mit einem Prüfkopf nach einer der vorangehenden Ausführungsformen gelöst, wobei die Prüfvorrichtung einen Bildsensor umfasst, der an einem Ende des gesamten Strahlenganges, vorzugsweise am Ende des axialen zweiten Strahlengangabschnitts, angeordnet ist und entlang dem Strahlengang einfallendes Licht als Bild aufzeichnet. Es ist natürlich auch möglich, dass nach dem zweiten Strahlengangabschnitt weitere umgelenkte Strahlengangabschnitte folgen, an deren Ende der Bildsensor vorgesehen wird.

Im zweiten Strahlengangabschnitt ist vorzugsweise ein Objektiv vorgesehen, das das Spiegelbild vom Freiformspiegel auf den Bildsensor abbildet.

Zwischen dem Freiformspiegel und dem Objektiv kann eine drehend antreibbare Hohlwelle vorgesehen sein, die mit dem Prüfkopf drehfest verbunden ist. Die Hohlwelle ist vorzugsweise Bestandteil eines Hohlwellenmotors, wobei der Hohlwellenmotor als Hohlwellenschrittmotor ausgebildet sein kann. Somit kann der Prüfkopf gegenüber dem Bildsensor gedreht werden, so dass bei einer 360°-Drehung des Prüfkopfs, zur Überprüfung der gesamten Oberfläche der Bohrung, keine Bauteile gedreht werden müssen, die elektrische Anschlüsse und damit Kabelzuleitungen aufweisen. Die Drehung des abgebildeten Lichtes auf dem Bildsensor kann mittels einer Messsoftware verarbeitet werden.

Wenn der Prüfkopf einen ersten Strahlenkanal entlang dem ersten Strahlengangabschnitt aufweist und dieser axial in eine Stirnfläche des Prüfkopfs mündet, kann, wie vorangehend bereits erläutert, die Prüfvorrichtung Beleuchtungsmittel aufweisen, die der Stirnfläche gegenüberliegend angeordnet sind.

Zum Messen von zwei Laufflächen einer Pleuelstange wird vorzugsweise eine Prüfanordnung vorgesehen, die zwei Prüfvorrichtungen wie vorangehend beschrieben aufweist, wobei die Prüfvorrichtungen mit parallel zueinander angeordneten Längsachsen angeordnet sind. Somit können beide Bohrungen der Pleuelstange gleichzeitig überprüft werden.

Bevorzugte Ausführungsbeispiele der Erfindung werden im folgenden anhand der Zeichnungen näher erläutert. Hierin zeigt
- **Figur 1**: eine perspektivische Darstellung einer erfindungsgemäßen Prüfanordnung;
- **Figur 2**: eine perspektivische Darstellung einer der Prüfvorrichtungen gemäß Figur 1;
- **Figur 3**: einen Längsschnitt durch die Prüfvorrichtung gemäß Figur 2;
- **Figur 4**: einen Längsschnitt durch den Prüfkopf der Prüfvorrichtung gemäß Figur 3;
- **Figur 5**: eine perspektivische Darstellung des Prüfkopfs gemäß Figur 4.

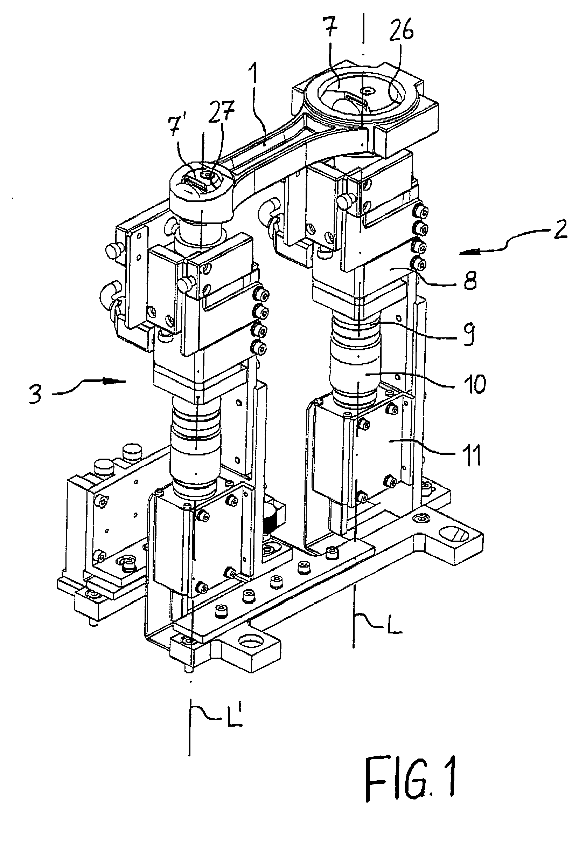

Figur 1 zeigt eine Gesamtansicht in perspektivischer Darstellung einer erfindungsgemäßen Prüfanordnung zum Prüfen einer Pleuelstange 1 mittels zweier Prüfvorrichtungen 2, 3. Die Prüfanordnung umfasst die beiden Prüfvorrichtungen 2, 3, die vertikal stehend angeordnet sind und z.B. auf einer Basisplatte montiert sein können.

An vertikal oberen Enden weisen die Prüfvorrichtungen 2, 3 Prüfköpfe 7, 7' auf, mit denen die Laufflächen 26, 27 der Pleuelstange 1 geprüft werden können. Die Laufflächen 26, 27 werden optisch z.B. auf Riefen, Schlagstellen, Lunker und Rost überprüft. Ferner kann der Crackbereich am großen Auge der Pleuelstange überprüft werden.

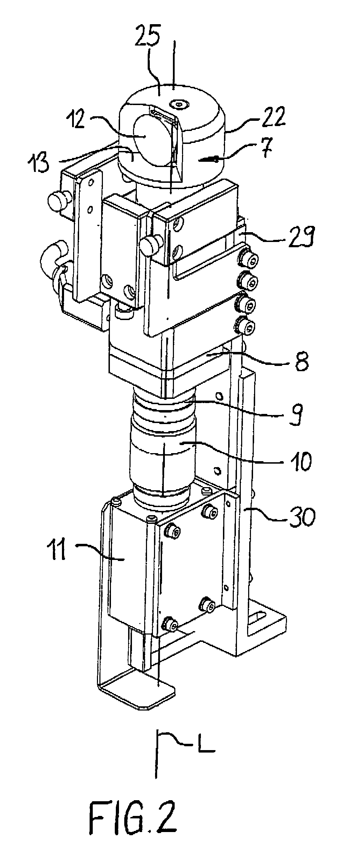

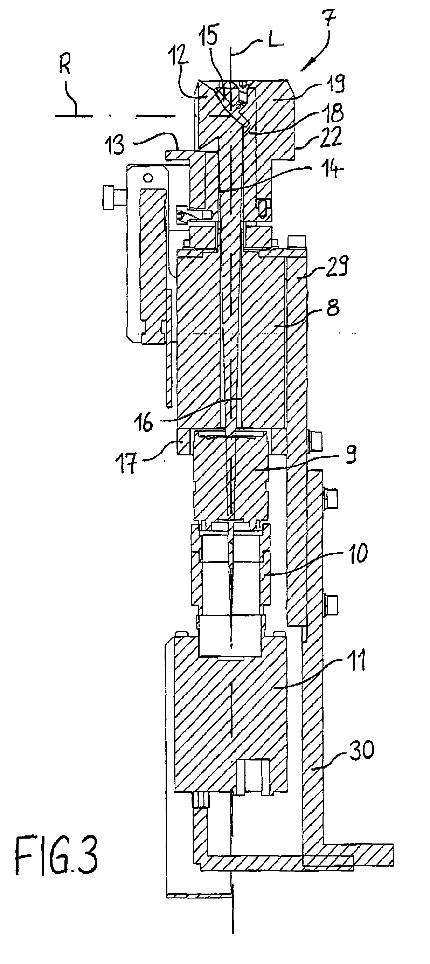

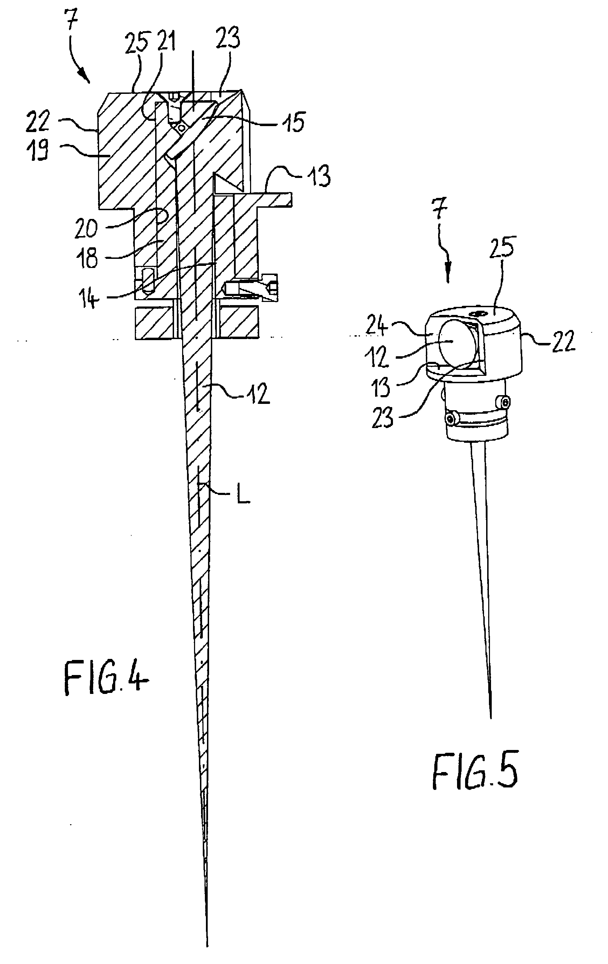

Die Prüfvorrichtungen 2, 3 werden im folgenden exemplarisch anhand der Prüfvorrichtungen 2 für das große Auge der Pleuelstange 1 anhand der Figuren 2 und 3 erläutert, wobei der Prüfkopf 7 detailliert in den Figuren 4 und 5 dargestellt ist.

Die Prüfvorrichtung 2 umfasst den Prüfkopf 7, einen Hohlwellenschrittmotor 8, ein Objektiv 9, einen Zwischenring 10 sowie einen Bildsensor in Form einer Kamera 11, die in dieser Reihenfolge vertikal entlang einer Längsachse L übereinander angeordnet sind, wobei die Kamera 11 das unterste Bauelement darstellt. Zur Verdeutlichung ist der Strahlengang 12 durch die Prüfvorrichtung 2 schematisch gezeigt. Der Strahlengang 12 unterteilt sich in einem radial verlaufenden ersten Strahlengangabschnitt entlang einem Radius R und einen axial verlaufenden zweiten Strahlengangabschnitt entlang der Längsachse L.

Der Prüfkopf 7 ist im wesentlichen in Form eines Zylinderkörpers dargestellt. In dem Prüfkopf 7 ist eine Ausnehmung 13 vorgesehen, die einen radialen ersten Strahlenkanal entlang eines Radius R darstellt. Die Ausnehmung 13 führt von der Außenfläche des Prüfkopfs 7 zu einem Freiformspiegel 15, der innerhalb des Prüfkopfs 7 befestigt ist. Ferner weist der Prüfkopf 7 eine zentrale Bohrung 14 auf, die einen axialen zweiten Strahlenkanal bildet und von einer der Kamera 11 zugewandten Stirnfläche des Prüfkopfes 7 zum Freiformspiegel 15 führt. Das von der Lauffläche der Pleuelstange reflektierte Licht trifft somit durch den ersten Strahlenkanal in Form der Ausnehmung 13 auf den Freiformspiegel 15. Der Freiformspiegel 15 lenkt das Licht in axiale Richtung entlang der Längsachse L um. Der Strahlengang 12 weist somit den radialen ersten Strahlengangabschnitt von der Lauffläche zum Freiformspiegel 15 auf und den axialen zweiten Strahlengangabschnitt vom Freiformspiegel 15 zur Kamera 11 auf. Die zentrale Bohrung 14 verläuft entlang eines Teils des axialen zweiten Strahlengangabschnitts.

Im Anschluss an den Strahlengang innerhalb des Prüfkopfs 7 ist der Hohlwellenschrittmotor 8 vorgesehen, der eine zentrale Bohrung 16 aufweist, durch den der axiale zweiten Strahlengang verläuft. Die Bohrung 16 ist hierbei durch eine nicht detailliert dargestellte Hohlwelle des Hohlwellenschrittmotors 8 gebildet.

An dem Hohlwellenschrdtmotor 8 ist am unteren Ende eine Staubkappe 17 in Form eines Rings vorgesehen, die in axialer Richtung betrachtet das Objektiv 9 teilweise überlappt und umschließt. Zwischen dem Objektiv 9 und der Kamera 11 ist ein Zwischenring 10 mit zentraler Bohrung 28 vorgesehen, welche auf der Kamera 11 befestigt ist.

Durch diese Anordnung wird ein Bild der Lauffläche über dem Freiformspiegel 15 auf die Kamera 11 abgebildet.

Ein Außenteil des Hohlwellenschrittmotors 8 ist mit einem Haltearm 29 verbunden, der fest an einem Befestigungswinkel 30 befestigt ist, wobei der Befestigungswinkel 30 auf einer Basisplatte der Prüfanordnung befestigt ist. Ebenso sind das Objektiv 9, der Zwischenring 10 und die Kamera 11 fest auf der Basisplatte befestigt. Die nicht dargestellte Hohlwelle des Hohlwellenschrittmotors 8 ist drehbar im Außenteil des Hohlwallenschrittmotors 8 angeordnet und mit dem Prüfkopf 7 verbunden, so dass der Prüfkopf 7 relativ zur Kamera 11 um die Längsachse L gedreht werden kann. Hierdurch ist es möglich, die vollständige Abwicklung der Lauffläche der Pleuelstange abzubilden. Vorteilhaft ist, dass nicht die gesamte Kamera 11 gedreht werden muss, so dass keine Kabel verdreht werden, sondern lediglich die optischen Bauteile des Prüfkopfs 7.

Wie aus Figur 4 deutlich wird, umfasst der Prüfkopf 7 einen inneren Spiegelhalter 18, der im wesentlichen zylindrisch ausgebildet ist und die Bohrung 14 bildet. Der Spiegelhalter 18 weist eine zylindrische Außenfläche 21 auf, auf die eine Zentrierhülse 19 mit einer zentralen Bohrung 20 aufgesteckt ist. Die Zentrierhülse 19 weist eine Zentrierfläche 22 in Form einer koaxial zur Längsachse L angeordneten zylindrischen Außenfläche auf. Diese ist derart an diejenige Bohrung der Pleuelstange 1 angepasst, deren Laufflächen mit der Prüfvorrichtung überprüft werden soll, dass die Zentrierhülse 19 mit Spielpassung in der Bohrung der Pleuelstange sitzt. Hierzu wird von der Messmaschine die Pleuelstange mit einer in Figur 1 nicht dargestellten Hebe- und Senkvorrichtung auf die Zentrierhülsen 19 der beiden Prüfvorrichtungen 2, 3 aufgesetzt. Während des Messvorgangs werden dann mittels der Hohlwellenschrittmotoren 8 die Prüfköpfe 7, 7' in der jeweiligen Bohrung der Pleuelstange gedreht.

Der Spiegelhalter 18 und die Zentrierhülse 19 bilden zusammen die Ausnehmung 13, die den radialen ersten Strahlenkanal darstellt. Die Ausnehmung 13 bildet darüber hinaus zwei Seitenflächen 23, 24, die radial zur Längsachse L verlaufen, Die Seitenflächen 23, 24 sind reflektierend ausgestaltet. Da die Ausnehmung 13 ferner in eine von der Kamera 11 abgewandte Stirnfläche 25 des Prüfkopfs 7 mündet, kann gegenüber der Stirnfläche 25 eine Lichtquelle angeordnet werden, die in die Ausnehmung 13 strahlt und dort die Seitenflächen 23, 24 anstrahlt. Von diesen wird das Licht auf die zu überprüfende Lauffläche reflektiert. Vorzugsweise wird eine diffuse Lichtquelle verwendet.

Grundsätzlich ist es jedoch auch möglich, z.B. innerhalb des axialen zweiten Strahlengangabschnitts Licht einzukoppeln, das entlang des axialen zweiten Strahlengangabschnitts auf den Freiformspiegel und von dort auf die Lauffläche leuchtet.

Grundsätzlich ist es auch denkbar, dass im Anschluss an den axialen zweiten Strahlengangabschnitt bis zur Kamera der Strahlengang weiter umgelenkt wird.

### Bezugszeichenliste

- 1: Pleuelstange
- 2: Prüfvorrichtung
- 3: Prüfvorrichtung
- 7: Prüfkopf
- 8: Hohlwellenschnittmotor
- 9: Objektiv
- 10: Zwischenring
- 11: Kamera (Bildsensor)
- 12: Strahlengang
- 13: Ausnehmung (erster Strahlenkanal)
- 14: Bohrung (zweiter Strahlenkanal)
- 15: Freiformspiegel
- 16: Bohrung
- 17: Staubkappe
- 18: Spiegelhalter
- 19: Zentrierhülse
- 20: Bohrung
- 21: zylindrische Außenfläche
- 22: Zentrierfläche
- 23: Seitenfläche
- 24: Seitenfläche
- 25: Stirnfläche
- 26: Lauffläche
- 27: Lauffläche
- 28: Bohrung
- 29: Haltearm
- 30: Befestigungswinkel

## Patentansprüche

1. Prüfkopf für eine Prüfvorrichtung zum Prüfen einer Oberfläche (26) einer Bohrung eines Objekts (1),
wobei der Prüfkopf (7) um eine Längsachse (L) drehbar angeordnet ist, und wobei ein Umlenkspiegel (15) an dem Prüfkopf (7) befestigt ist, der von der Oberfläche (26) der Bohrung reflektiertes Licht, das entlang eines quer zur Längsachse (L) verlaufenden ersten Strahlengangabschnitts auf den Umlenkspiegel (15) trifft, in Richtung eines axial zur Längsachse (L) verlaufenden zweiten Strahlengangabschnitts umlenkt,
**dadurch gekennzeichnet,**
**dass** der Umlenkspiegel ein Freiformspiegel (15) ist.

2. Prüfkopf nach Anspruch 1,
**dadurch gekennzeichnet,**
**dass** der Freiformspiegel (15) konvex geformt ist.

3. Prüfkopf nach einem der vorangehenden Ansprüche,
**dadurch gekennzeichnet,**
**dass** der Freiformspiegel (15) derart gestaltet ist, dass der Abbildungsmaßstab in Umfangsrichtung der zu überprüfenden Bohrung von dem Abbildungsmaßstab in Längsrichtung der zu überprüfenden Bohrung abweicht.

4. Prüfkopf nach einem der vorangehenden Ansprüche,
**dadurch gekennzeichnet,**
**dass** der Prüfkopf (7) im Bereich des ersten Strahlengangabschnitts frei von optischen Bauelementen ist.

5. Prüfkopf nach einem der vorangehenden Ansprüche,
**dadurch gekennzeichnet,**
**dass** der Prüfkopf (7) Mittel zum Zentrieren des Prüfkopfs (7) in der zu überprüfenden Bohrung (22) aufweist.

6. Prüfkopf nach Anspruch 5,
**dadurch gekennzeichnet,**
**dass** die Mittel zum Zentrieren in Form einer zylindrischen Außenfläche (22) des Prüfkopfs (7) gestaltet sind, deren Durchmesser derart an den Durchmesser der Bohrung angepasst ist, dass der Prüfkopf (7) mit Spielpassung in die Bohrung eingeführt werden kann.

7. Prüfkopf nach einem der vorangehenden Ansprüche,
**dadurch gekennzeichnet,**
**dass** der Prüfkopf (7) einen ersten Strahlenkanal (13) entlang des ersten Strahlengangabschnitts aufweist.

8. Prüfkopf nach Anspruch 7,
**dadurch gekennzeichnet,**
**dass** der Prüfkopf (7) eine zylindrische Außenfläche (22) aufweist und dass der erste Strahlenkanal als im Querschnitt betrachtet im wesentlichen kreissektorförmige Ausnehmung (13) im Prüfkopf (7) gestaltet ist und in die zylindrische Außenfläche (22) mündet.

9. Prüfkopf nach Anspruch 8,
**dadurch gekennzeichnet,**
**dass** die Ausnehmung (13) reflektierende Seitenflächen (23, 24) aufweist.

10. Prüfkopf nach einem der Ansprüche 7 bis 9,
**dadurch gekennzeichnet,**
**dass** die Ausnehmung (13) axial in eine Stirnfläche (25) des Prüfkopfs (7) mündet.

11. Prüfkopf nach einem der vorangehenden Ansprüche,
**dadurch gekennzeichnet,**
**dass** der Prüfkopf (7) einen zweiten Strahlenkanal (14) entlang zumindest eines Teils des zweiten Strahlengangabschnitts aufweist.

12. Prüfvorrichtung, zum Prüfen der Oberfläche einer Bohrung eines Objekts mit einem Prüfkopf (7) nach einem der vorangehenden Ansprüche, umfassend einen Bildsensor (11), der an einem Ende des gesamten Strahlengangs angeordnet ist und entlang dem Strahlengang einfallendes Licht als Bild aufzeichnet.

13. Prüfvorrichtung nach Anspruch 12,
**dadurch gekennzeichnet,**
**dass** der Bildsensor (11) am Ende des axial angeordneten zweiten Strahlengangabschnitts angeordnet ist.

14. Prüfvorrichtung nach Anspruch 13,
**dadurch gekennzeichnet,**
**dass** im zweiten Strahiengangabschnitt ein Objektiv (9) vorgesehen ist.

15. Prüfvorrichtung nach Anspruch 14,
**dadurch gekennzeichnet,**
**dass** zwischen dem Freiformspiegel (15) und dem Objektiv (9) eine drehend antreibbare Hohlwelle vorgesehen ist, die mit dem Prüfkopf (7) drehfest verbunden ist.

16. Prüfvorrichtung nach Anspruch 15,
**dadurch gekennzeichnet,**
**dass** die Hohlwelle Teil eines Hohlwellenmotors (8) ist.

17. Prüfvorrichtung nach Anspruch 16,
**dadurch gekennzeichnet,**
**dass** der Hohlwellenmotor als Hohlwellenschrittmotor (8) ausgebildet ist.

18. Prüfvorrichtung nach einem der Ansprüche 12 bis 17,
**dadurch gekennzeichnet,**
**dass** der Prüfkopf (7) einen ersten Strahlenkanal (13) entlang des ersten Strahlengangabschnitts aufweist, der axial in eine Stirnfläche (25) des Prüfkopfs (7) mündet, und
**dass** Beleuchtungsmittel vorgesehen sind, die der Stirnfläche (25) gegenüberliegend angeordnet sind.

19. Prüfanordnung mit zwei Prüfvorrichtungen (2, 3) nach einem der Ansprüche 12 bis 18, wobei die Prüfvorrichtungen (2, 3) mit parallel zueinander angeordneten Längsachsen (L, L') angeordnet sind.
